# EUROPÄISCHE PATENTANMELDUNG

(11) **EP 2 006 584 A1**
(43) Veröffentlichungstag der Anmeldung: **24.12.2008**
(21) Anmeldenummer: 07012193.4
(22) Anmeldetag: 21.06.2007
(51) Int. Cl.: F16J 15/40, F15B 1/02, F16J 15/34

(54) **Puffereinrichtung zum Abführen von Leckagegas zu einem Entsorgungssystem und Sperrgassystem**

(71) Anmelder: SIEMENS AKTIENGESELLSCHAFT, 80333 München (DE)
(72) Erfinder: Alfes, Ludger, 46282 Dorsten (DE); Mölders, Peter, 47509 Rheurdt (DE)

(57) **Zusammenfassung**

Eine Puffereinrichtung (18) für eine Rohrleitung (16) zum Abführen von Leckagegas zu einem Entsorgungssystem (17), beispielsweise eine Fackel, weist eine in die Rohrleitung einbaubare ersten Rückschlagarmatur (19) zum Unterbinden einer Rückströmung in der Rohrleitung und ein stromauf der ersten Rückschlagarmatur an die Rohrleitung (16) anschließbaren Pufferbehälter (20) auf, der derart dimensioniert ist, dass, wenn die Puffereinrichtung in die Rohrleitung eingebaut ist und die erste Rückschlagarmatur (19) bei einer vorbestimmten, zeitlich begrenzten Druckerhöhung im Entsorgungssystem geschlossen ist, stromauf der ersten Rückschlagarmatur ein vorbestimmtes Druckniveau in der Rohrleitung (16) stets unterschritten bleibt. Ein Sperrgassystem für eine Wellendichtung (6) für einen Turboverdichter (1) weist die Rohrleitung (16) zum Abführen von Leckagegas der Wellendichtung (6) zu einem Entsorgungssystem (17) und die Puffereinrichtung (18) auf. Ein Turboverdichter weist das Sperrgassystem (5) auf.

## Beschreibung

Puffereinrichtung für eine Rohrleitung zum Abführen von Leckagegas zu einem Entsorgungssystem, Sperrgassystem für eine Wellendichtung für einen Turboverdichter mit der Puffereinrichtung

Die Erfindung betrifft eine Puffereinrichtung für eine Rohrleitung zum Abführen von Leckagegas zu einem Entsorgungssystem, beispielsweise einer Fackel, ein Sperrgassystem für eine Wellendichtung für einen Turboverdichter, wobei das Sperrgassystem die Rohrleitung zum Abführen von Leckagegas der Wellendichtung zu dem Entsorgungssystem und die Puffereinrichtung aufweist, und einen Turboverdichter mit dem Sperrgassystem.

In Anlagen der chemischen, petrochemischen Industrie finden Turboverdichter Anwendung. Der Turboverdichter weist prinzipiell einen Rotor auf. Der Turboverdichter ist beispielsweise ein Einwellenverdichter, dessen Rotor eine Welle aufweist, auf der Laufräder aufgefädelt sind. Ferner weist der Turboverdichter ein Gehäuse auf, das den Rotor umgibt, der relativ zu dem Gehäuse drehbar ist.

Der Rotor ist im allgemeinen an seinen Längsendbereichen der Welle jeweils mittels eines Lagers abgestützt, das an dem Gehäuse oder an einem separaten Lagerbock abgestützt und in atmosphärischer Umgebung angesiedelt ist. Die Lager sind eingerichtet Radialkräfte und/oder Axialkräfte aufzunehmen, die auf den Rotor einwirken. Die Lager können Gleitlager, insbesondere Kippsegmentgleitlager sein.

Im Inneren des Gehäuses liegen typischerweise thermodynamische Zustände vor, die unterschiedlich zur atmosphärischen Umgebung sind. Deshalb ist im Bereich der Lager der Rotor gegen das Gehäuse abgedichtet, so dass das Innere des Gehäuses zur atmosphärischen Umgebung hin so gut wie gasdicht isoliert ist und ein Gasaustausch zwischen dem Inneren des Gehäuses und der atmosphärischen Umgebung so gut wie nicht stattfinden kann.

Die Abdichtung des Rotors gegen das Gehäuse wird herkömmlich mit einer Wellendichtung bewerkstelligt. Aufgrund der der Wellendichtung inhärenten Leckagerate und des Druckunterschieds zwischen der atmosphärischen Umgebung und dem Inneren des Gehäuses stellt sich über die Wellendichtung eine Leckageströmung ein. Ist das Leckagegas brennbar, so wird es herkömmlich in einer Fackel verbrannt, die in der Anlage vorgesehen ist.

Je nach Beaufschlagung durch andere Anlagenteile der Anlage kann der Druck in der Fackel schwanken und sogar kurzfristig hohe Spitzenwerte annehmen. Bei diesen Spitzenwerten können der maximal zulässige Gegendruckwert für die Wellendichtung überschritten werden. Ist dies der Fall, so erfolgt eine automatische Abschaltung des Turboverdichters, um einen Schaden an der Wellendichtung abzuwenden und um den Austritt von Prozessgas aus dem Turboverdichter sicher zu verhindern.

Sobald der Turboverdichter in der Anlage abgeschaltet ist, ist diese nur noch beschränkt betreibbar oder die Anlage steht still. Insbesondere bei Anlagenstillstand hat der Betreiber der Anlage in der Regel erhebliche finanzielle Einbußungen zu tragen. Ferner ist insbesondere zum Wiederanfahren des Turboverdichters ein organisatorischer Mehraufwand notwendig.

Zum Reduzieren der Häufigkeit der Abschaltungen des Turboverdichters aufgrund von Überschreiten des maximal zulässigen Gegendruckwerts für die Wellendichtung ist es bekannt, den Abdichtdruck des Turboverdichters zu erhöhen. Diese Maßnahme ist allerdings aufwendig und geht mit einer Absenkung des Wirkungsgrades des Turboverdichters einher. Ist für die Wellendichtung eine Sperrung mit Zwischengas vorgesehen, müsste dabei ferner der Netzdruck des Zwischensperrgases erhöht werden. Dies ist allerdings nur in begrenztem Umfang möglich und führt in der Praxis häufig nicht zu einem kontinuierlichen, sicheren Betrieb des Turboverdichters bei kurzzeitigen Fackelspitzendrücken. Die Abschaltung des Turboverdichters aufgrund der Überschreitung des maximal zulässigen Gegendruckwerts für die Wellendichtung kann herkömmlich nicht vollständig unterbunden werden kann.

Aufgabe der Erfindung ist es, eine Puffereinrichtung für eine Rohrleitung zum Abführen von Leckagegas zu einem Entsorgungssystem, beispielsweise einer Fackel, und ein Sperrgassystem für eine Wellendichtung für den Turboverdichter und den Turboverdichter mit dem Sperrgassystem zu schaffen, wobei der Turboverdichter selbst bei auftretenden Spitzendrücken im Entsorgungssystem, beispielsweise bei Fackelspitzendrücken, weiter betrieben werden kann und nicht abgeschaltet zu werden braucht.

Die erfindungsgemäße Puffereinrichtung für eine Rohrleitung zum Abführen von Leckagegas zu einem Entsorgungssystem weist eine in die Rohrleitung einbaubare erste Rückschlagarmatur zum Unterbinden einer Rückströmung in der Rohrleitung und einen stromauf der ersten Rückschlagarmatur an die Rohrleitung anschließbaren Pufferbehälter auf, der derart dimensioniert ist, dass, wenn die Puffereinrichtung in die Rohrleitung eingebaut ist und die erste Rückschlagarmatur bei einer vorbestimmten, zeitlich begrenzten Druckerhöhung im Entsorgungssystem geschlossen ist, stromauf der ersten Rückschlagarmatur ein vorbestimmtes Druckniveau in der Rohrleitung stets unterschritten bleibt.

Das erfindungsgemäße Sperrgassystem für eine Wellendichtung für einen Turboverdichter weist die Rohrleitung zum Abführen von Leckagegas der Wellendichtung zu einem Entsorgungssystem und die Puffereinrichtung auf. Ferner weist der erfindungsgemäße Turboverdichter das Sperrgassystem auf.

Das Entsorgungssystem ist beispielsweise eine Fackel.

Zur Abdichtung des Turboverdichters dient die Wellendichtung, durch die Leckagegas strömt. Das Leckagegas soll ein vorbestimmtes Druckniveau an der Wellendichtung, d.h. das zulässige Wellendichtungsgegendruckniveau, nicht überschreiten, da sonst die Abdichtwirkung der Wellendichtung beeinträchtigt wäre und die Wellendichtung Schaden nehmen könnte. Wird das zulässige Wellendichtungsgegendruckniveau in dem Leckagegas unmittelbar stromab der Wellendichtung überschritten, so wird üblicherweise ein Alarm ausgelöst und/oder der Turboverdichter abgeschaltet. Bei Normalbetrieb des Turboverdichters ist das Druckniveau im Leckagegas unmittelbar stromab der Wellendichtung unterhalb des zulässigen Wellendichtungsgegendruckniveaus angesiedelt.

Tritt eine vorbestimmte zeitlich begrenzte Druckschwankung im Entsorgungssystem auf, so schließt sich die erste Rückschlagarmatur und der Druck in der Rohrleitung steht von dem Entsorgungssystem her bis zu der ersten Rückschlagarmatur an. Während der Zeitspanne, während der die Rückschlagarmatur geschlossen ist, strömt durch die Wellendichtung weiterhin das Leckagegas in den Abschnitt der Rohrleitung, der stromauf der ersten Rückschlagarmatur liegt. Dadurch, dass in diesem Abschnitt der Rohrleitung der Pufferbehälter angeschlossen ist, strömt das Leckagegas in den Pufferbehälter. Der Pufferbehälter ist erfindungsgemäß derart dimensioniert, dass während der Zeitspanne, während der die erste Rückschlagarmatur geschlossen ist, der Druck, der in dem Rohrleitungsabschnitt stromauf der ersten Rückschlagarmatur und somit in dem Sperrgassystem herrscht, unterhalb des zulässigen Wellendichtungsgegendruckniveaus stets bleibt. Dadurch wird unterbunden, dass der Druck in dem Leckagegas unmittelbar stromab der Wellendichtung das zulässige Wellendichtungsgegendruckniveau überschreitet. Somit wird der zulässige Druck in dem Sperrgassystem für die Wellendichtung auch während der Zeitspanne eingehalten, während der die Druckschwankung im Entsorgungssystem auftritt. Dadurch wird eine Alarmierung oder eine Abschaltung des Turboverdichters aufgrund eines zu hohen Drucks in dem Sperrgassystem unterbunden und der Turboverdichter kann auch während des Auftretens der Druckschwankung im Entsorgungssystem weiter betrieben werden, so dass eine Abschaltung des Turboverdichters nicht zu erfolgen braucht.

Somit beeinträchtigt vorteilhaft die Druckschwankung im Entsorgungssystem nicht die Welledichtung, so dass der Druck des Leckagegas unmittelbar stromab der Wellendichtung unter dem zulässige Wellendichtungsgegendruckniveau gehalten wird. Dadurch wird die Abschaltung des Turboverdichters vermieden.

In einer Anlage der chemischen, petrochemischen Industrie, in der der Turboverdichter vorgesehen werden kann, ist in der Regel der Turboverdichter an dem Produktionsprozess unmittelbar beteiligt. Wird der Turboverdichter abgeschaltet, so steht der Betrieb der gesamten Anlage häufig still. Im allgemeinen ist der Anlagenstillstand mit hohen Kosten verbunden, so dass selbst eine kurzzeitige Abschaltung des Turboverdichters hohe Kosten zu Folge haben kann. Ferner kann es sein, dass beim Herunterfahren oder Hochfahren der Anlage, beispielsweise hervorgerufen durch die Turboverdichterabschaltung eine, Umweltschutzbestimmung nicht eingehalten wird, was nachteiling für die Umwelt ist.

Ferner ist es vorteilhaft, dass, obwohl es sich bei der Puffereinrichtung um eine Maßnahme zur Überwindung der Druckschwankung im Entsorgungssystem handelt, durch das Vorsehen der Puffereinrichtung der Wirkungsgrad des Turboverdichters nicht beeinträchtigt ist.

Bevorzugt weist die Puffereinrichtung ein Triggerventil auf, via das der Pufferbehälter mit der Rohrleitung bei Erreichen einer vorbestimmten Bedingung leckagegasleitend verbindbar ist.

Das Triggerventil ist zum Öffnen und zum Schließen triggerbar. Dadurch kann vorteilhaft der Pufferbehälter mittels dem Triggerventil bei dessen Triggerung in eine Offenstellung bei Erreichen der vorbestimmten Bedingungen mit der Rohrleitung leckagegasleitend verbunden werden. Dadurch ist es ermöglicht, dass der Pufferbehälter nicht ständig mit der Rohrleitung leckagegasleitend in Verbindung steht, sondern erst zu der Rohrleistung zugeschaltet wird, wenn die vorbestimmte Bedingung erreicht ist und das Triggerventil in die Offenstellung getriggert wird.

Bevorzugt ist das Triggerventil ein Drucksteuerventil.

Dadurch kann vorteilhaft das Triggerventils durch den Druck des Leckagegases in der Rohrleitung stromauf der ersten Rückschlagarmatur in die Offenstellung getriggert werden. Somit ist der Pufferbehälter zu der Rohrleitung zuschaltbar, wenn vorteilhaft der aktuelle Druck des Leckagegases in der Rohrleitung stromab der ersten Rückschlagarmatur knapp unterhalb des zulässiges Wellendichtungsgegendruckniveaus liegt. Dadurch wird vorteilhaft erreicht, dass sowohl der Pufferbehälter nur in Betriebssituationen zu der Rohrleistung zugeschaltet wird, wenn die Gefahr besteht, dass der Druck des Leckagegases in der Rohrleitung stromauf der ersten Rückschlagarmatur das zulässige Wellendichtungsgegendruckniveau überschreitet.

Es ist bevorzugt, dass der Pufferbehälter eine zweite Rückschlagarmatur aufweist, die das Triggerventil umgeht und in Strömungsrichtung von der Rohrleitung in den Pufferbehälter sperrt.

Dadurch entleert sich automatisch der Pufferbehälter über die zweite Rückschlagarmatur, nachdem der Druck des Entsorgungssystems wieder auf Normalniveau abgesunken ist und die erste Rückschlagarmatur geöffnet ist.

Ferner ist bevorzugt, dass der Pufferbehälter eine Belüftungseinrichtung und/oder eine Entleerungseinrichtung aufweist.

Dadurch kann vorteilhaft der Pufferbehälter belüftet und/oder entleert werden.

Es ist bevorzugt, dass das Sperrgassystem eine Druckhochalarmierung und/oder eine Druckhochabschaltung aufweist, mit der die Rohrleitung gegen eine Überschreitung des vorbestimmten Druckniveaus abgesichert ist.

Sollte eine auftretende, nicht vorgesehene Druckschwankung im Entsorgungssystem zeitlich länger ausgedehnt sein als die vorbestimmte, zeitlich begrenzte Druckschwankung im Entsorgungssystem, so besteht die Gefahr, dass in dem Sperrgassystem der Druck des Leckagegases unmittelbar stromab der Wellendichtung einen Druck annimmt, der oberhalb des zulässigen Wellendichtungsgegendruckniveaus liegt. Dadurch könnte die Wellendichtung beschädigt und undicht werden, weshalb der Turboverdichter abgeschaltet wird.

Es ist bevorzugt, dass die Wellendichtung eine gasgeschmierte Gleitringdichtung in Tandemanordnung aufweist, die eine mit Reingas beaufschlagte Primärdichtung aufweist, deren Leckage das Leckagegas bildet.

Ferner ist bevorzugt, dass die Primärdichtung gegen den Ausgleichsdruck des Turboverdichters abdichtet.

Im folgenden wird ein bevorzugtes Ausführungsbeispiel eines erfindungsgemäßen Sperrgassystems eines Turboverdichters anhand der beigefügten schematischen Zeichnungen erläutert. Es zeigt:
- Fig. 1: ein R & I Fliessbild des Ausführungsbeispiels des erfindungsgemäßen Sperrgassystems und
- Fig. 2: Detail II aus Fig. 1.

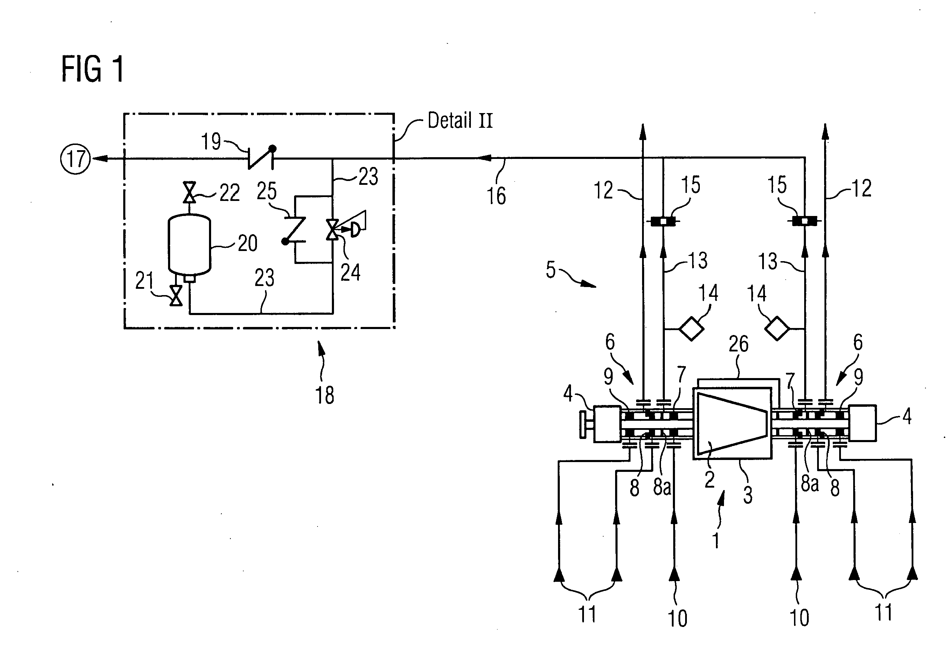

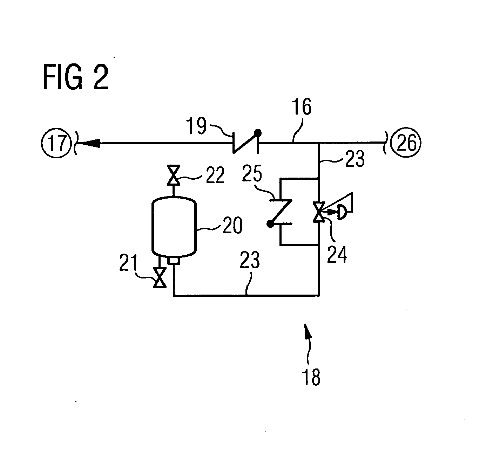

Wie es aus den Fig. 1 und 2 ersichtlich ist, weist ein Einwellenturboverdichter 1 ein Gehäuse 3 und einen Rotor 2 auf, der von dem Gehäuse 3 umgeben ist. Der Rotor 2 weist Längsendbereiche auf, die jeweils von einem Lager 4 gelagert sind. Das Lager 4 ist in atmosphärischer Umgebung angeordnet. Der Rotor 2 ist gegen die Lager 4 jeweils mit einer Wellendichtung abgedichtet. Zum Betreiben der Wellendichtungen weist der Einwellenturboverdichter 1 ein Sperrgassystem 5 auf.

Die Wellendichtungen sind jeweils als eine gasgeschmierte Gleitringdichtung 6 in Tandemordnung ausgeführt. Die Gleitringdichtung 6 weist eine Primärdichtung 7, eine Sekundärdichtung 8 und eine Tertiärerdichtung 9 auf. Die Primärdichtung 7 dichtet prozessseitig und die Tertiärdichtung 9 dichtet lagerseitig ab, wobei die Sekundärdichtung 8 zwischen der Primärdichtung 7 und der Tertiärdichtung 9 angesiedelt ist. Zwischen der Primärdichtung 7 und der Sekundärdichtung 8 ist ein Zwischenlabyrinth 8a angeordnet, das den Raum zwischen der Primärdichtung 7 und der Sekundärdichtung 8 abtrennt.

Die Primärdichtung 7 ist prozessseitig mit Reingas beaufschlagt, das via eine Reingasleitung 10 prozessseitig unmittelbar vor der Primärdichtung 7 anliegt. Durch die der Primärdichtung 7 immanenten Leckagerate strömt Reingas durch die Primärdichtung 7 in den Raum zwischen der Primärdichtung 7 und dem Zwischenlabyrinth 8a.

Der Einwellenturboverdichter 1 weist eine Ausgleichsdruckleitung 26 auf, die derart angeordnet ist, dass an den beiden Primärdichtungen 7 prozessseitig gegen den Saugdruck des Einwellenturboverdichters 1 im Betrieb oder gegen den Ausgleichsdruck des Einwellenturboverdichters 1 im Stillstand abgedichtet ist. Der Druck des Reingases ist höher gewählt als der des Ausgleichsdrucks, so dass durch die Primärdichtung 7 in allen Betriebszuständen lediglich das Reingas strömt.

Zwischen der Sekundärdichtung 8 und dem Zwischenlabyrinth 8a liegt Sperrgas, bevorzugt Stickstoff, via eine Sperrgasleitung 11 an. Der Druck des Sperrgases zwischen der Sekundärdichtung 8 und dem Zwischenlabyrinth 8a ist höher als der des Reingases zwischen der Primärdichtung 7 und dem Zwischenlabyrinth 8a. Dadurch strömt über das Zwischenlabyrinth 8a das Sperrgas in den Raum zwischen der Primärdichtung 7 und dem Zwischenlabyrinth 8a und vermischt sich mit dem dort befindlichen Reingas. Das Reingas-Sperrgas-Gemisch wird über eine Leckageleitung 13 des Sperrgassystems abgeführt.

Den beiden Gleitringdichtungen 6 ist je eine der Leckageleitung 13 zugeordnet, die in eine gemeinsame Fackelsammelleitung 16 münden. Die Leckageleitungen 13 weisen je eine Druckhochabschaltungseinrichtung 14 auf, mit denen bei Überschreiten des Drucks in den Leckageleitungen 13 über ein vorbestimmtes Druckniveau der Einwellenturboverdichter 1 abgeschaltet wird. Das vorbestimmte Druckniveau ist derart ausgewählt, dass bei Auftreten desselben in den Leckageleitungen 13 ein Schaden an den Primärdichtungen 7 nicht entstehen kann.

Zwischen der Tertiärdichtung 9 und der Sekundärdichtung 8 ist die Gleitringdichtung 6 mit Sperrgas, bevorzugt Stickstoff, via die Sperrgasleitung 11 beaufschlagt, wodurch die Tertiärdichtung 9 gegen das Lager 4 abgedichtet ist. Die durch die Sekundärdichtung 8 tretende Leckage des Sperrgases wird mittels einer Über-Dach-Leitung 12 an die Atmosphäre abgeführt.

Die Leckageleitungen 13 weisen jeweils eine Blende 15 auf, um den Maximaldurchfluss in den Leckageleitungen 13 beispielsweise bei Bruch der Primärdichtung 7 zu begrenzen. Ferner weisen die Leckageleitungen 13 stromab der Blende 15 eine Rückschlagklappe (nicht gezeigt) auf, um eine Rückströmung aus der Fackelsammelleitung 16 in die Leckageleitungen 13 zu unterbinden. Außerdem weist die Fackelsammelleitung 16 ein Druckregelventil (nicht gezeigt) auf, mit dem der Druck in der Fackelsammelleitung 16 abregelbar ist.

Mit der Fackelsammelleitung 16 wird das Leckagegas von den Leckageleitungen 13 zu einer Fackel 17 geführt. Die Fackelsammelleitung 16 weist eine Puffereinrichtung 18 auf. Die Puffereinrichtung 18 weist eine erste Rückschlagklappe 19 auf, die in der Fackelsammelleitung 16 derart vorgesehen ist, dass eine Rückströmung von der Fackel 17 durch die Fackelsammelleitung 16 unterbunden ist.

Die Puffereinrichtung 18 weist einen Pufferbehälter 20 auf, der ein Entleerungsventil 21 und ein Belüftungsventil 22 aufweist. Der Pufferbehälter 20 ist mittels einer Pufferbehälterleitung 23 stromauf der ersten Rückschlagklappe 19 angeschlossen. Ferner weist die Puffereinrichtung 18 ein Druckregelventil 24 auf, das in der Pufferbehälterleitung 23 eingebaut ist. Das Druckregelventil 24 ist derart ausgelegt, dass es bei Überschreiten eines vorbestimmten Druckniveaus in dem Leitungsabschnitt der Pufferbehälterleitung 23, der an die Fackelsammelleitung 16 angeschlossen ist, sich öffnet und somit den Pufferbehälter 20 mit der Fackelsammelleitung 16 gasleitend verbindet. Das vorbestimmte Druckniveau ist derart gewählt, dass es in ausreichendem Abstand unterhalb des Druckniveaus liegt, bei dem die Druckhochabschaltungseinrichtung 14 den Einwellenturboverdichter 1 abschältet. Dieser ausreichende Abstand der beiden Druckniveaus in Kombination mit der Dimensionierung des Pufferbehälters 20 ist derart bemessen, dass unter dem Gesichtspunkt der Betriebssicherheit die Häufigkeit des Ansprechens der Druckhochabschaltungseinrichtung 14 minimiert ist.

Die Puffereinrichtung 18 weist eine zweite Rückschlagklappe 25 auf, die in die Pufferbehälterleitung 23 derart eingebaut ist, dass die zweite Rückschlagklappe 25 das Druckregelventil 24 umgeht und in Strömungsrichtung von der Fackelsammelleitung 16 zu dem Pufferbehälter 20 sperrt. Der Einwellenturboverdichter 1 ist einer Anlage (nicht gezeigt) der chemischen Industrie integriert. Die Anlage weist die Fackel 17 auf, an der weitere Anlagenteile angeschlossen sind. Der Fackeldruck der Fackel 17 liegt im normalen Anlagenbetrieb nahe dem Atmosphärendruck mit ca. 100 bis 150 mbar Überdruck. Aufgrund einer entsprechenden Beaufschlagung der Fackel mit Fackelgas kann der Fackeldruck schwanken und auf ein erhöhtes Niveau ansteigen. Diese Fackelüberdruckschwankung breitet sich in der Fackelsammelleitung 16 aus.

Ist der Fackeldruck leicht erhöht, ist das Druckniveau in der Fackelsammelleitung 16 auch leicht erhöht. Dieses erhöhte Druckniveau breitet sich auch in der Leckageleitungen 13 aus und ist für die Primärdichtung 7 noch unkritisch, wodurch die Abschaltung des Einwellenturboverdichters 1 durch die Druckhochabschaltungseinrichtung 14 nicht ausgelöst wird. Die Leckagen der Gleitringdichtungen 6, insbesondere der Primärdichtungen 7, werden via den Leckageleitungen 13 und der Fackelsammelleitung 16 zu der Fackel 17 geführt. Der Ansprechdruck des Druckregelventils 24 ist oberhalb des Drucks, der in der Fackelsammelleitung 16 herrscht, so dass das Druckregelventil 24 nicht anspricht und somit geschlossen ist. Der Druck in dem Pufferbehälter 20 entspricht dem normalen Fackeldruck der Fackel 17 und liegt bei ca. 100 bis 150 mbar Überdruck. Die zweite Rückschlagklappe 25 ist geschlossen, so dass der Pufferbehälter 20 von der Fackelsammelleitung 16 abgetrennt ist. Dadurch, dass die erste Rückschlagklappe 19 geöffnet ist, wird das Leckagegas von den Leckageleitungen 13 in die Fackelsammelleitung 16 zu der Fackelleitung 17 geleitet.

Steigt der Fackeldruck im Rahmen der Fackelüberdruckschwankung an, so schließt sich die erste Rückschlagklappe 19 und der Fackeldruck liegt bis zu der ersten Rückschlagklappe 19 an. Aufgrund der permanenten Leckagen, die durch die Primärdichtungen 7 in die Leckageleitungen 13 abgegeben werden, erhöht sich der Druck in der Fackelsammelleitung 16 stromauf der ersten Rückschlagklappe 19 und den Leckageleitungen 13. Schließlich wird der Ansprechdruck des Druckregenventils 24 erreicht und das Druckregelventil 24 spricht an und öffnet sich, so dass der Pufferbehälter 20 mit der Fackelsammelleitung 16 gasleitend verbunden ist. Nun strömt das Leckagegas aus der Fackelsammelleitung über das geöffnete Druckregelventil 24 in den Pufferbehälter 20. Dadurch steigt der Druck in dem Pufferbehälter 20 an. Der Pufferbehälter 20 ist so dimensioniert, dass der Druck in dem Sperrgassystem 5 nicht über den für die Primärdichtung 7 kritischen Druck ansteigt, wenn die Fackelüberdruckschwankung nicht länger andauert als die definierte Zeitspanne der vorbestimmten, zeitlich begrenzten Fackelüberdruckschwankung.

Fällt der Fackeldruck der Fackel 17 wieder auf den Normaldruck ab, schließt sich das Druckregelventil 24 und das in dem Pufferbehälter 20 gespeicherte Leckagegas entweicht über die Rückschlagklappe 25 in die Fackelsammelleitung 16 und passiert die erste Rückschlagklappe 19 in Richtung zur Fackel 17. Der Druck in dem Pufferbehälter fällt dann auf den normalen Fackeldruck ab.

### Bezugszeichenliste

- 1: Einwellenturboverdichter
- 2: Rotor
- 3: Gehäuse
- 4: Lager
- 5: Sperrgassystem
- 6: gasgeschmierte Gleitringdichtung in Tandemanordnung
- 7: Primärdichtung
- 8: Sekundärdichtung
- 8a: Zwischenlabyrinth
- 9: Tertiärerdichtung
- 10: Reingasleitung
- 11: Sperrgasleitung
- 12: Über-Dach-Leitung
- 13: Leckageleitung
- 14.: Druckhochabschaltungseinrichtung
- 15: Blende
- 16: Fackelsammelleitung
- 17: Fackel
- 18: Puffereinrichtung
- 19: erste Rückschlagklappe
- 20: Pufferbehälter
- 21: Entleerungsventil
- 22: Belüftungsventil
- 23: Pufferbehälterleitung
- 24: Druckregelventil
- 25: zweite Rückschlagklappe
- 26: Ausgleichsleitung

## Patentansprüche

1. Puffereinrichtung für eine Rohrleitung (16) zum Abführen von Leckagegas zu einem Entsorgungssystem (17), wobei die Puffereinrichtung (18) eine in die Rohrleitung (16) einbaubare erste Rückschlagarmatur (19) zum Unterbinden einer Rückströmung in der Rohrleitung (16) und einen stromauf der ersten Rückschlagarmatur (19) an die Rohrleitung (16) anschließbaren Pufferbehälter (20) aufweist, der derart dimensioniert ist, dass, wenn die Puffereinrichtung (18) in die Rohrleitung (16) eingebaut ist und die erste Rückschlagarmatur (19) bei einer vorbestimmten, zeitlich begrenzten Druckerhöhung im Entsorgungssystem geschlossen ist, stromauf der ersten Rückschlagarmatur (19) ein vorbestimmtes Druckniveau in der Rohrleitung (16) stets unterschritten bleibt.

2. Puffereinrichtung gemäß Anspruch 1,
wobei die Puffereinrichtung (18) ein Triggerventil (24) aufweist, via das der Pufferbehälter (20) mit der Rohrleitung (16) bei Erreichen einer vorbestimmten Bedingung leckagegasleitend verbindbar ist ist.

3. Puffereinrichtung gemäß Anspruch 2,
wobei das Triggerventil (24) ein Drucksteuerventil ist.

4. Puffereinrichtung gemäß Anspruch 2 oder 3,
wobei die Puffereinrichtung (18) eine zweite Rückschlagarmatur (25) aufweist, die das Triggerventil (24) umgeht und in Strömungsrichtung von der Rohrleitung (16) in den Pufferbehälter (20) sperrt.

5. Pufferbehälter gemäß einem der Ansprüche 1 bis 4,
wobei der Pufferbehälter (20) eine Belüftungseinrichtung (22) und/oder eine Entleerungseinrichtung (21) aufweist.

6. Sperrgassystem für eine Wellendichtung (6) für einen Turboverdichter (1), mit einer Rohrleitung (16) zum Abführen von Leckagegas der Wellendichtung (6) zu einem Entsorgungssystem (17) und einer Puffereinrichtung (18) gemäß einem der Ansprüche 1 bis 5.

7. Sperrgassystem gemäß Anspruch 6,
wobei das Sperrgassystem eine Druckhochalarmeinrichtung und/oder eine Druckhochabschaltungseinrichtung (14) aufweist, mit der die Rohrleitung (16) gegen eine Überschreitung des vorbestimmten Druckniveaus abgesichert ist.

8. Turboverdichter mit einem Sperrgassystem (5) gemäß Anspruch 6 oder 7.

9. Turboverdichter gemäß Anspruch 8,
wobei die Wellendichtung (6) eine gasgeschmierte Gleitringdichtung in Tandemanordnung aufweist, die eine mit Reingas beaufschlagte Primärdichtung (7) aufweist, deren Leckage das Leckagegas bildet.

10. Turboverdichter gemäß Anspruch 9,
wobei die Primärdichtung (7) gegen den Ausgleichsdruck des Turboverdichters (1) abdichtet.
